(19) Europäisches Patentamt
European Patent Office
Office européen des brevets

(11) **EP 4 667 987 A1**

(12) **EUROPÄISCHE PATENTANMELDUNG**

(43) Veröffentlichungstag:
**24.12.2025   Patentblatt 2025/52**

(21) Anmeldenummer: **25183610.2**

(22) Anmeldetag: **18.06.2025**

(51) Internationale Patentklassifikation (IPC):
***G02B 6/02*** *(2006.01)*

(52) Gemeinsame Patentklassifikation (CPC):
**G02B 6/02123; G02B 6/02152; G02B 6/0218;**
G02B 6/02133; G02B 6/02209

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität:  **20.06.2024   DE 102024117500**

(71) Anmelder: **Leibniz-Institut für Astrophysik
Potsdam (AIP)
14482 Potsdam, Brandenburg (DE)**

(72) Erfinder:
• **Rodriguez Alvarez, Carlos Enrique
14469 Potsdam (DE)**
• **Rahman, Aashia
14473 Potsdam (DE)**
• **Önel, Hakan
13509 Berlin (DE)**
• **Dionies, Frank
14476 Potsdam (DE)**
• **Paschke, Jens
14476 Potsdam (DE)**

(74) Vertreter: **Heinemeyer, Karsten
AdvInno Patent-u. Rechtsanwaltspart. mbB
Heinemeyer & Joachim
Sandstrasse 17-23
23552 Lübeck (DE)**

(54) **OPTISCHES FILTERSYSTEM ZUR WELLENLÄNGENFILTERUNG**

(57)     Die Erfindung betrifft ein optisches Filtersystem (100) zur Wellenlängenfilterung, insbesondere zur Unterdrückung der Hydroxyl-(OH)-Linie in empfangenen Lichtwellen (105), mit einer optischen Faser (110) und einer Faserhalterung (120). Die optische Faser weist einen sich in Erstreckungsrichtung (112) der optischen Faser erstreckenden Faserkern (114) mit einem Brechungsindex $n_K$ auf, in den ein Faser-Bragg-Gitter (115) aus sich in Erstreckungsrichtung wiederholenden Gitterschichten (117) mit einem Brechungsindex $n_G$ eingeschrieben ist. Die Faserhalterung ist angeordnet und ausgebildet, die optische Faser mit einer einstellbaren Haltespannung vorzuspannen, wobei die Faserhalterung mindestens ein Ausschnittfenster (125) aufweist, welches für einen Beschriftungsprozess zum Einschreiben des Faser-Bragg-Gitters geöffnet und für die Wellenlängenfilterung durch eine Abdeckvorrichtung (127) der Faserhalterung geschlossen werden kann, und wobei die optische Faser derart in der Faserhalterung befestigt ist, dass an beiden Enden (118, 118') der optischen Faser ein jeweiliges freies Faserende (119, 119') außerhalb der Faserhalterung derart bereitgestellt ist, dass das jeweilige freie Faserende mit einer jeweiligen anderen externen optischen Faser (130, 130') verbunden werden kann.

Fig.2

**Beschreibung**

Die Erfindung betrifft ein optisches Filtersystem zur Wellenlängenfilterung, insbesondere zur Unterdrückung einer vorbestimmten Wellenlänge, beispielsweise der Hydroxyl-(OH)-Linie, in empfangenen Lichtwellen, wie beispielsweise in empfangenen Lichtwellen von bodengestützten Teleskopen, die bei Wellenlängen im Infrarotbereich arbeiten. Außerdem betrifft die Erfindung eine Verwendung des optischen Filtersystems und ein Verfahren zur Wellenlängenfilterung, insbesondere zur Unterdrückung einer vorbestimmten Wellenlänge, beispielsweise der Hydroxyl-(OH)-Linie, in empfangenen Lichtwellen, wie beispielsweise von bodengestützten Teleskopen, die bei Wellenlängen im Infrarotbereich arbeiten.

Optische Filtersysteme sind Geräte, die selektiv Licht verschiedener Wellenlängen durchlassen, reflektieren oder blockieren. Optische Filter werden in einer Vielzahl von Anwendungen eingesetzt, darunter Mikroskopie, Spektroskopie und Bildgebung. Insbesondere die Fähigkeit, bestimmte Wellenlängen über Faser-Bragg-Gitter zu reflektieren, hat sich in den letzten Jahren in Anwendungen durchgesetzt, bei denen unerwünschtes Licht mit bestimmten Wellenlängen unterdrückt werden soll. Zum Beispiel kann eine interferometrische Anordnung verwendet werden, um ein Gitter in den Kern der optischen Faser einzuschreiben. Während des Einschreibens des Gitters findet eine Modulation des Brechungsindexes im Kern der optischen Faser statt. Durch die sich wiederholende Gitterstruktur wird abhängig vom effektiven Brechungsindex der optischen Faser und von weiteren Details der Gitterstruktur, wie der Periodizität der Gitterschichten, ein Wellenlängenbereich in den durch die optische Faser transportierten Lichtwellen zurückgeworfen und dadurch in transmittierten Lichtwellen unterdrückt.

US 2015/0144773 A1 beschreibt ein Verfahren zur Kompensation einer faseroptischen Messung zur Bestimmung einer mechanischen Größe. Insbesondere wird die Filterung über ein Faser-Bragg-Gitter unter Berücksichtigung von thermischen Abhängigkeiten beschrieben.

Aufgabe der vorliegenden Erfindung ist es, ein verbessertes optisches Filtersystem, insbesondere ein besonders zuverlässiges, reproduzierbares und anwenderfreundliches optisches Filtersystem, bereitzustellen.

Gemäß einem ersten Aspekt der Erfindung wird hierzu ein optisches Filtersystem zur Wellenlängenfilterung, insbesondere zur Unterdrückung einer vorbestimmten Wellenlänge, beispielsweise der Hydroxyl-(OH)-Linie, in empfangenen Lichtwellen, vorgeschlagen, mit

- einer optischen Faser, welche einen sich in Erstreckungsrichtung der optischen Faser erstreckenden Faserkern mit einem Brechungsindex $n_K$ aufweist, in den ein Faser-Bragg-Gitter aus sich in Erstreckungsrichtung wiederholenden Gitterschichten mit einem Brechungsindex $n_G$ eingeschrieben ist,
- einer Faserhalterung, welche angeordnet und ausgebildet ist, die optische Faser mit einer einstellbaren Haltespannung vorzuspannen, wobei die Faserhalterung mindestens ein Ausschnittfenster aufweist, welches für einen Beschriftungsprozess zum Einschreiben des Faser-Bragg-Gitters geöffnet und für die Wellenlängenfilterung durch eine Abdeckvorrichtung der Faserhalterung geschlossen werden kann, und wobei die optische Faser derart in der Faserhalterung befestigt ist, dass an beiden Enden der optischen Faser ein jeweiliges freies Faserende außerhalb der Faserhalterung derart bereitgestellt ist, dass das jeweilige freie Faserende mit einer jeweiligen anderen externen optischen Faser verbunden werden kann.

Im Rahmen der Erfindung wurde erkannt, dass eine Entnahme der optischen Faser aus der Faserhalterung und ein zusätzliches Einsetzen in eine Messapparatur, für die Wellenlängenfilterung sehr aufwendig ist. Zudem ist für eine präzise Wellenlängenfilterung auch ein präzises Einstellen der Haltespannung während der Messung erforderlich, was den Aufwand des zusätzlichen Einsetzens weiter vergrößert. Vor diesem Hintergrund wurde der Aufwand reduziert durch die Verwendung der Faserhalterung, in der die optische Faser während des Einschreibens des Faser-Bragg-Gitters und während der Wellenlängenfilterung gelassen werden kann. Dies gewährleistet eine gute Wiederholbarkeit des Prozesses und erhöht einen Schutz der Faser vor Beschädigungen.

Durch die Verwendung einer solchen Faserhalterung kann der Aufwand für den Nutzer des optischen Filtersystems reduziert werden. Zudem wird eine konstante Haltespannung während des Einschreibens und während der Filterung ermöglicht. Hierdurch werden Messungenauigkeiten vermieden und eine zuverlässige Einstellung der Haltespannung ermöglicht.

Es ist bekannt, dass eine bekannte Temperaturveränderung und eine dadurch indizierte Veränderung des Faser-Bragg-Gitters durch eine entsprechend geeignete Haltespannung der optischen Faser ausgeglichen werden kann. Daher erlaubt eine besonders zuverlässige Einstellung der Haltespannung auch eine besonders zuverlässige Unterdrückung von thermischen Effekten auf die Wellenlängenfilterung. Die anzuwendende Haltespannung zum Erreichen solch eines athermischen Verhaltens kann dabei, wie im Rahmen der entsprechenden Ausführungsformen geschildert, abgeschätzt und/oder über einen entsprechenden Prüfstand empirisch bestimmt werden. Vorzugsweise kann eine für bestimmte Temperaturen und/oder Temperaturbereiche einzustellende Haltespannung für die Nutzung des optischen Filtersystems hinterlegt sein.

Vorteilhaft erlaubt das Ausschnittfenster mit der Abdeckvorrichtung, dass das Ausschnittfenster geschlossen werden kann, ohne eine Ausrichtung und/oder Haltespannung der optischen Faser im Innern der Faserhalterung zu verändern. Die Abdeckvorrichtung stellt auch sicher, dass es keine strukturelle Zersetzung gibt, die die präzise Funktion des optischen Filtersystems beeinträchtigt. So kann die Faserhalterung beispielsweise aus einer ansonsten bekannten Faser-Bragg-Gitter-Fertigungsanlage entnommen werden, um die freien Faserenden der optischen Faser außerhalb der Faserhalterung mit anderen optischen Fasern zu verbinden und dadurch als Wellenfilter für durch die optischen Fasern geleitete Lichtwellen nutzbar zu sein.

Das Ausschnittfenster kann ein einzelner offener Bereich einer Haltestruktur der Faserhalterung mit mehreren offenen Bereichen sein, wobei das Ausschnittfenster sich dadurch auszeichnet, dass durch das Ausschnittfenster das Einschreiben des Faser-Bragg-Gitters möglich ist und dass dieses Ausschnittfenster durch die Abdeckvorrichtung geschlossen werden kann.

Die Faserhalterung ist vorzugsweise eine robuste Vorrichtung, die ohne ein Verbiegen oder dergleichen die Haltespannung zuverlässig bereitstellt. Vorzugsweise ist die Faserhalterung im Wesentlichen zylindrisch ausgebildet, wobei eine Zylinderachse der Faserhalterung in die Erstreckungsrichtung der optischen Faser ausgerichtet ist.

Die optische Faser ist beispielsweise eine Glasfaser, eine Kunststofffaser oder dergleichen.

Das Einschreiben des Faser-Bragg-Gitters kann auf verschiedene Arten erfolgen, wobei insbesondere die Anwendung eines interferometrischen Verfahrens, einer Fotomaske und/oder eine direkte Laserbeschriftung mittels Femtosekunden-Laser grundsätzlich bekannt sind. Über derartige bekannte Verfahren kann der Brechungsindex $n_G$ zuverlässig in die optische Faser geschrieben werden. Hierdurch wird eine Brechungsindexmodulation in den Kern der Faser eingeführt.

Der Faserkern der optischen Faser kann zumindest teilweise von einem optischen Medium mit einem von $n_K$ verschiedenen Brechungsindex und/oder zumindest teilweise von einem Mantelmaterial umgeben sein. Typische Ausgestaltungen und Herstellungsverfahren für derartige optische Fasern sind grundsätzlich bekannt und werden daher nicht im Folgen detailliert beschrieben.

Die externen optischen Fasern sind nicht in der Faserhalterung befestigt und während des Einschreibens des Faser-Bragg-Gitters nicht an der optischen Faser angeordnet. Die Verbindung von optischen Fasern untereinander ist bekannt und erfolgt typischerweise über Verbindungsstücke.

Das Einstellen der Haltespannung entspricht im Wesentlichen einer Verformung der optischen Faser, aus der sich die Haltespannung ergibt. Insofern kann im Rahmen der folgenden Ausführungen die Haltespannung an der optischen Faser auch mit einer Verformung und/oder einer Verformungsspannung der optischen Faser gleichgesetzt werden.

Die beiden Enden der optischen Faser sind jeweils Endbereiche der optischen Faser, wohingegen das freie Faserende jeweils einen konkret außerhalb der Faserhalterung befindlichen frei zugänglichen Abschnitt der optischen Faser beschreibt. Insofern bilden die freien Faserenden einen Teil der beiden Enden der optischen Fasern.

Nachfolgend werden bevorzugte Ausführungsformen des erfindungsgemäßen optischen Filtersystems beschrieben.

In einer besonders bevorzugten Ausführungsform ist die Haltespannung für die optische Faser derart eingestellt, dass für einen vorbestimmten Temperaturbereich und/oder für eine vorbestimmte Temperatur temperaturbedingte Änderungen innerhalb des Faser-Bragg-Gitters durch die Haltespannung im Wesentlichen kompensiert sind. In dieser Ausführungsform wird vorteilhaft ausgenutzt, dass die Haltespannung die thermisch bedingten Veränderungen des Faser-Bragg-Gitters innerhalb der optischen Faser durch Verkleinerung oder Vergrößerung des Abstandes der Gitterebenen des Faser-Bragg-Gitters kompensieren kann. Dadurch kann die herauszufilternde Wellenlänge über einen gewissen Temperaturbereich sehr zuverlässig gehalten werden. In solch einem Temperaturbereich mit sich kompensierenden thermischen Effekten kann man das erfindungsgemäße optische Filtersystem daher auch als athermisches System bezeichnen. Beispielhaft wird zur theoretischen Betrachtung solch eines athermischen Systems im Zusammenhang mit optischen Filtersystemen auf US 6,907,164 B2 verwiesen. Darin wird erläutert, dass die thermischen Effekte einer Temperaturdifferenz von $\Delta T$ auf die resultierende Verschiebung $\Delta\lambda_B$ der unterdrückten sogenannten Bragg-Wellenlänge $\lambda_B$ wie folgt zusammengefasst werden können:

$$\frac{\Delta\lambda_B}{\lambda_B} = \xi\Delta T + \alpha_1\Delta T - p_e(\alpha_1 - \alpha_2)\Delta T$$

Hierbei ist $\xi$ ein thermo-optischer Koeffizient, $\alpha_1$ ist ein spezifischer thermischer Ausdehnungskoeffizient, der das Temperatur-abhängige Verhalten der optischen Faser zwischen entsprechenden Haltepunkten der Faserhalterung indiziert, $\alpha_2$ ist ein allgemeiner thermische Ausdehnungskoeffizient der optischen Faser, und $p_e$ ist die photoelastische Konstante. Der erste Term auf der rechten Seite der obigen Gleichung zeigt daher den Einfluss des thermooptischen Effekts auf den Brechungsindex der optischen Faser. Der zweite Term auf der rechten Seite der obigen Gleichung zeigt den Effekt der Längenänderung der optischen Faser, die unmittelbar eine Veränderung im Gitterabstand der Gitterebenen des Faser-Bragg-Gitters bewirkt. Der dritte Term auf der rechten Seite der obigen Gleichung zeigt den Einfluss des spannungsoptischen Effekts auf den Brechungsindex der Glasfaser.

Hierdurch ergeben sich verschiedene Möglichkeiten, wie die rechte Seite der obigen Gleichen in etwa 0 ergeben kann, so dass eine Kompensation der thermischen Effekte erfolgt. Ein Beispiel für solch eine Kompensation wäre gegeben, wenn folgende Gleichung gilt:

$$\alpha_1 = \frac{\alpha_2\, p_{\mathrm{e}} + \xi}{p_{\mathrm{e}} - 1}$$

Dieses Beispiel der vorhergehen Ausführungsform zeigt, wie eine Kompensation der thermischen Effekte über die entsprechende Einstellung der Haltespannung realisiert werden kann. Hierbei ist jedoch zu berücksichtigen, dass die Koeffizienten in obiger Gleichung zumindest teilweise eine leichte TemperaturAbhängigkeit aufweisen, so dass die zu erreichende Kompensation der thermischen Effekte stets nur in engen Temperaturbereichen und dazugehörigen engen Bereichen der Haltespannung möglich ist.

Alternativ oder ergänzend zu der im vorhergehenden Beispiel geschilderten theoretischen Bestimmung der einzustellenden Haltespannung kann auch über empirische Versuche, wie beispielsweise über einen Prüfstand, für vorbestimmte Temperaturen und/oder vorbestimmte Temperaturbereiche die einzustellende Haltespannung bestimmt werden.

Vorzugsweise weist die optische Faser eine Länge von mindestens 40 mm, insbesondere mindestens 90 mm, besonders bevorzugt mindestens 100 mm, wie beispielsweise 110 mm, auf. Mit einer derartigen Länge kann besonders zuverlässig eine Befestigung der optischen Faser in der Faserhalterung sichergestellt werden, während die freien Faserenden außerhalb der Faserhalterung lang genug sind, um die externen optischen Fasern sicher daran zu befestigen. Eine große Länge führt zudem für eine Temperaturkompensation auch zu einer großen zu kompensierenden Längendifferenz, die zuverlässig und mit einem geringen relativen Fehler eingestellt werden kann. Dadurch kann ein Anteil des unvermeidbaren systematischen Fehlers beim Einstellen der Haltespannung an der Faserhalterung geringer sein als bei kürzeren optischen Fasern.

Vorzugsweise beträgt der vorbestimmte Temperaturbereich mindestens 10 K, insbesondere mindestens 30 K, besonders bevorzugt mindestens 50 K. Derartige Temperaturbereiche ergeben sich typischerweise bei bodennahen Messungen durch Temperaturunterschiede während eines Messvorgangs von mehreren Stunden, Tagen und/oder Woche. Daher ist es vorteilhaft solch einen Temperaturbereich für eine Kompensation von temperaturbedingten Änderungen zu berücksichtigen. Als besonders vorteilhaft für Anwendungen bei optischen Auswertungen in der Astronomie hat sich ein Temperaturbereich von etwa 50 K herausgestellt.

In einer besonders bevorzugten Ausführungsform weist die Faserhalterung mindestens zwei Ausschnittfenster auf, die beide jeweils für einen Beschriftungsprozess zum Einschreiben des Faser-Bragg-Gitters geöffnet und für die Wellenlängenfilterung geschlossen werden können. Das Vorsehen von mindestens zwei Ausschnittfenstern ermöglicht eine kleine Fenstergröße des jeweiligen Ausschnittfensters, wobei Laserstrahlen beim Einschreiben des Faser-Bragg-Gitters dennoch von beiden Seiten die Faserhalterung der optischen Faser passieren können. Diese Art der Anordnung erleichtert die Ausrichtung der optischen Faser in Bezug auf den Laserstrahl, der zur Herstellung des Faser-Bragg-Gitters verwendet wird, erheblich. Alternativ oder ergänzend kann ein Kamerasystem zur präzisen Ausrichtung verwendet werden. Eine kleine Fenstergröße erlaubt zudem ein besonders sicheres Halten der optischen Faser innerhalb der Faserhalterung durch einen zuverlässigen Schutz vor Umgebungseinflüssen. Zusätzlich erlaubt das Vorsehen mehrerer Austrittsfenster ein Vermeiden von Reflexionen eines Laserstrahls innerhalb der Faserhalterung beim Einschreiben des Faser-Bragg-Gitters.

In einer vorteilhaften Ausführungsform ist die Abdeckvorrichtung eine Abdeckklappe, ein Abdeckeinschub, eine Abdeckauflage oder dergleichen. Derartige Ausführungen der Abdeckvorrichtung können besonders robust und einfach umgesetzt werden. In einer vorteilhaften Variante dieser Ausführungsform kann die Abdeckvorrichtung einen Verschlussmechanismus aufweisen, um ein versehentliches Öffnen des Ausschnittfensters zu vermeiden. Solch ein Verschlussmechanismus kann über ein eine Einrastverbindung, einen Sicherungshebel und/oder dergleichen umgesetzt sein.

In einer bevorzugten Ausführungsform sind die sich wiederholenden Gitterschichten des Faser-Bragg-Gitters senkrecht zu der Erstreckungsrichtung ausgebildet. Eine derartige Anordnung der Gitterschichten ist vorteilhaft für Filtersysteme, bei denen sich zu filternde Signale entlang der Erstreckungsrichtung der optischen Faser bewegen. Zudem erlaubt die Anordnung der Gitterschichten in dieser Ausführungsform eine Drehsymmetrie der optischen Faser um eine zentrale Achse entlang der Erstreckungsrichtung dieser Faser. Dadurch kann der Aufbau des entsprechenden optischen Filtersystems vereinfacht werden.

In einer weiteren Ausführungsform erfolgt die Befestigung der optischen Faser an einem nicht-ummantelten Teil der optischen Faser. Hierdurch kann sichergestellt werden, dass ein Ablösen eines Mantels der optischen Faser und/oder eine andere Beschädigung des Mantels nicht zu einer Beeinträchtigung der Funktionsfähigkeit des optischen Filtersystems führt.

In einer weiteren vorteilhaften Ausführungsform ist die Faserhalterung ausgebildet, die optische Faser zum Vorspannen über mindestens einen Klebepunkt, insbesondere über einen jeweiligen Klebepunkt an beiden Seiten relativ zum Faser-Bragg-Gitter, zu halten. Derartige Klebepunkte können besonders einfach für eine spätere Weiterverwendung der optischen Faser entfernt werden. Zudem führen derartige Klebepunkte zu einem vergleichsweise geringen Risiko von Beschädigungen an der optischen Faser und daher auch zu einem geringen Risiko von entsprechenden Fehlern bei der Wellenlängenfilterung aufgrund von lokalen Veränderungen des Brechungsindex innerhalb der beschädigten optischen Faser. Ein möglicher Klebstoff für solch einen Klebepunkt ist beispielsweise Sekundenkleber. Die Klebepunkte sind vorzugsweise an Haltebereichen der Faserhalterung vorgesehen. Die Haltebereiche können beispielsweise über eine U-Form, eine V-Form und/oder dergleichen zum Einlegen der optischen Faser strukturiert sein.

In einer weiteren vorteilhaften Ausführungsform weist die Faserhalterung Montagebefestigungspunkte für eine reproduzierbare Montage des optischen Filtersystems in einem externes Gitter-Schreibgerät für das Einschreiben des Faser-Bragg-Gitters auf. Derartige Montagebefestigungspunkte können eine sichere und reproduzierbare Befestigung des optischen Filtersystems ermöglichen, was insbesondere für den Prozess des Einschreibens des Faser-Bragg-Gitters besonders vorteilhaft ist. So wird eine besonders präzise Lage des Faser-Bragg-Gitters innerhalb der optischen Faser ermöglicht.

In einer bevorzugten Ausführungsform des optischen Systems erfolgt das Vorspannen der optischen Faser innerhalb der Faserhalterung über ein präzise verschiebbares Distanzierungselement. Das Distanzierungselement kann beispielsweise eine verschiebbare Scheibe sein, an welche besonders einfach und gleichmäßig eine Kraft zum Bereitstellen der Haltespannung angelegt werden kann. Vorteilhaft kann das Distanzierungselement und/oder ein das Distanzierungselement umgebendes Distanzierungsgerüst aus mindestens zwei über eine Steckverbindung verbindbaren Teilen bestehen. Hierdurch kann nach dem Einstellen der Haltespannung ein großer Teil des Distanzierungselements und/oder des das Distanzierungselement umgebenden Distanzierungsgerüsts entfernt werden, um eine geringere Größe des optischen Filtersystems während der Wellenlängenfilterung zu ermöglichen. In einer vorteilhaften Variante der vorhergehenden Ausführungsform ist das Distanzierungselement über eine Anzahl von normierten Distanzierungskomponenten, insbesondere Distanzierungsringen, reproduzierbar verschoben. Derartige Distanzierungskomponenten ermöglichen ein stufenweises Verstellen der Haltespannung. Hierdurch kann das optische Filtersystem stufenweise an eine aktuell vorliegende Umgebungstemperatur angepasst werden. So könnte beispielsweise jede Distanzierungskomponente einer vorbestimmten Temperaturdifferenz entsprechen, die über die Haltespannung ausgeglichen werden soll. Dabei kann das Einstellen der Haltespannung alternativ oder ergänzend iterativ erfolgen. So kann beispielsweise für eine vorbestimmte Anzahl und/oder Art von Distanzierungskomponenten geprüft werden, ob eine ausreichende Temperaturkompensation durch das optische Filtersystem vorliegt und abhängig von dieser Prüfung kann die Anzahl und/oder die Art der Distanzierungskomponenten verändert werden.

Gemäß einem zweiten Aspekt der Erfindung wird zur Lösung der oben genannten Aufgabe eine Verwendung des optischen Filtersystems gemäß dem ersten Aspekt der Erfindung für eine Temperaturkompensation, insbesondere bei einer Infrarotspektroskopie, besonders bevorzugt bei einer Nahinfrarotspektroskopie vorgeschlagen.

Diese Verwendung erlaubt eine besonders vorteilhafte Anwendung des erfindungsgemäßen optischen Filtersystems gemäß dem ersten Aspekt. So ist die Verwendung des Faser-Bragg-Gitters vorteilhaft zum Unterdrücken vorbestimmter Wellenlängenbereiche innerhalb der durch die optische Faser übertragenen Lichtwellen.

Besonders vorteilhaft ist hierbei die Anwendung bei der Unterdrückung von Hydroxyl-(OH)-Linien in astronomischen Messungen. Diese Linie entsteht durch OH-Radikale, die bei der Reaktion von atomarem Wasserstoff und Ozon in der Erdatmosphäre entstehen. Diese Linien liegen zwischen 0,61 $\mu$m und 2,62 $\mu$m und störend bei bodengebundenen Messungen durch die Atmosphäre im Rahmen der Infrarotspektroskopie, insbesondere einer Nahinfrarotspektroskopie. Daher hat sich gerade auf diesem Gebiet eine zuverlässige und vorzugsweise Temperatur-kompensierte Unterdrückung der OH-Linien als besonders vorteilhaft herausgestellt.

Gemäß einem dritten Aspekt der Erfindung wird zur Lösung der oben genannten Aufgabe ein Verfahren zur Wellenlängenfilterung, insbesondere zur Unterdrückung einer vorbestimmten Wellenlänge, beispielsweise der Hydroxyl-(OH)-Linie, in empfangenen Lichtwellen, vorgeschlagen, aufweisend die Schritte

- Vorspannen einer optischen Faser, welche einen sich in Erstreckungsrichtung der optischen Faser erstreckenden Faserkern mit einem Brechungsindex $n_K$ aufweist, in einer Faserhalterung mit einer Haltespannung, insbesondere mit einer vorbestimmten Haltespannung;
- Einschreiben eines Faser-Bragg-Gitter aus sich in Erstreckungsrichtung wiederholenden Gitterschichten mit einem Brechungsindex $n_G$ in den Faserkern der optischen Faser über ein Laser-Verfahren, wobei entsprechende Laserstrahlen für das Einschreiben die Faserhalterung über mindestens ein Ausschnittfenster der Faserhalterung passieren;
- Schließen des mindestens einen Ausschnittfensters durch eine Abdeckvorrichtung der Faserhalterung;

- Verbinden eines jeweiligen freien Faserendes der optischen Faser, welches aus der Faserhalterung herausragt, mit einer jeweiligen anderen optischen Faser, während die optische Faser vorgespannt in der Faserhalterung bleibt; und
- Ausführen der Wellenlängenfilterung mit der durch die Faserhalterung vorgespannten optischen Faser.

Das Verfahren gemäß dem dritten Aspekt wird durch das optische Filtersystem gemäß dem ersten Aspekt der Erfindung ausgeführt und weist daher zumindest die im Rahmen des ersten Aspekts der Erfindung erläuterten Vorteile auf.

Insbesondere erlaubt das erfindungsgemäße Verfahren einen kompletten Verzicht auf die Zwischenschritte des Entnehmens der optischen Faser aus dem Gitter-Schreibgerät und eines erneuten Befestigen der beschriebenen optischen Faser zur Wellenlängenfilterung. Dies wird durch die dauerhafte Befestigung der optischen Faser in der Faserhalterung und dass entsprechende Vorsehe des mindestens einen Ausschnittfensters ermöglicht.

Die Schritte des erfindungsgemäßen Verfahrens werden vorzugsweise in der angegebenen Reihenfolge ausgeführt. Zwischen dem Einschreiben des Faser-Bragg-Gitters und der Ausführung der Wellenlängenfilterung kann offenkundig ein langer Zeitraum liegen. Hierdurch wird der Schritt des Schließens des Ausschnittfensters besonders vorteilhaft, da während der Zeit zwischen dem Einschreiben und dem Filtern die optische Faser vor Umgebungseinflüssen innerhalb der Faserhalterung geschützt werden kann.

In einer vorteilhaften Ausführungsform des Verfahrens erfolgt das Vorspannen der optischen Faser über ein Ankleben eines entsprechenden Abschnitts der optischen Faser an einer Faserbefestigung der Faserhalterung und einen darauffolgenden Vorspannprozess. Die Faserbefestigung liegt vorzugsweise in einem Haltebereich der Faserhalterung. Die Faserbefestigung kann aufgrund Ihrer Struktur, beispielsweise einer U-Form, einer V-Form oder dergleichen, ein Einlegen und Ankleben der optischen Faser einfach, insbesondere automatisiert ausführbar, machen. Durch das Ankleben der optischen Faser kann die optische Faser besonders einfach und zuverlässig in der Faserhalterung angeordnet werden.

In einer vorteilhaften Variante der vorhergehenden Ausführungsform wird im Rahmen des Vorspannprozesses die Haltespannung für die optische Faser derart eingestellt, dass für einen vorbestimmten Temperaturbereich und/oder eine vorbestimmte Temperatur temperaturbedingte Änderungen innerhalb des Faser-Bragg-Gitters durch die Haltespannung im Wesentlichen kompensiert werden. Theoretische Grundlagen für eine solche Temperatur-Kompensation sind oben erläutert. Das erfindungsgemäße Verfahren erlaubt eine besonders zuverlässige und dauerhafte Kompensation dieser thermischen Einflüsse, da die eingestellte Haltespannung für die Verwendung der optischen Faser bei der Wellenlängenfilterung nicht mehr verändert werden muss, sondern dauerhaft in der Faserhalterung vorliegen kann.

In einer weiteren bevorzugten Ausführungsform erfolgt das Einschreiben des Faser-Bragg-Gitters über ein interferometrisches Verfahren, über ein Anwenden einer Fotomaske und/oder über eine direkte Laserbeschriftung mittels Femtosekunden-Laser. Diese drei Verfahren zum Einschreiben des Faser-Bragg-Gitters sind grundsätzlich bekannt und können einfach und automatisiert umgesetzt werden. Zudem kann man für diese bekannten Schreib-Verfahren auch bekannte und zuverlässig funktionierende Gitter-Schreibgeräte verwenden. Der technische Hintergrund zu diesen Schreib-Verfahren zum Einschreiben des Faser-Bragg-Gitters wird im Rahmen der Figurenbeschreibung weiter erläutert.

Die Erfindung soll nun anhand von in den Figuren schematisch dargestellten, vorteilhaften Ausführungsbeispielen näher erläutert werden. Von diesen zeigen im Einzelnen:

Fig. 1    eine schematische Darstellung eines ersten Ausführungsbeispiels eines optischen Filtersystems gemäß einem ersten Aspekt der Erfindung;

Fig. 2    eine schematische Darstellung eines zweiten Ausführungsbeispiels des optischen Filtersystems gemäß dem ersten Aspekt der Erfindung;

Fig. 3    eine schematische Darstellung eines dritten Ausführungsbeispiels des optischen Filtersystems gemäß dem ersten Aspekt der Erfindung; und

Fig. 4    ein Flussdiagramm eines Ausführungsbeispiels eines Verfahrens gemäß einem dritten Aspekt der Erfindung.

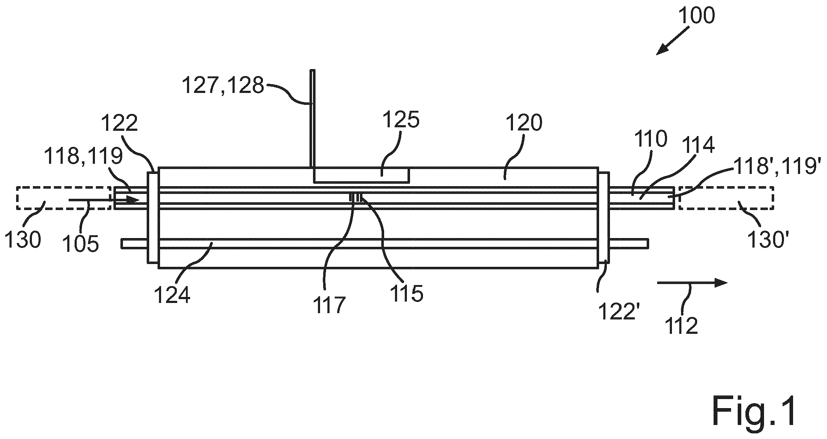

Fig. 1 zeigt eine schematische Darstellung eines ersten Ausführungsbeispiels eines optischen Filtersystems 100 gemäß einem ersten Aspekt der Erfindung.

Das optisches Filtersystem 100 ist zur Wellenlängenfilterung, insbesondere zur Unterdrückung der Hydroxyl-(OH)-Linie in empfangenen Lichtwellen 105, ausgebildet. Hierfür weist es zumindest eine optische Faser 110 und eine Faserhalterung 120 auf.

Die optischen Faser 110 ist vorliegend eine Glasfaser, welche einen sich in Erstreckungsrichtung 112 der optischen Faser 110 erstreckenden Faserkern 114 mit einem Brechungsindex $n_K$ aufweist, in den ein Faser-Bragg-Gitter 115 aus sich in Erstreckungsrichtung 114 wiederholenden Gitterschichten 117 mit einem Brechungsindex $n_G$ eingeschrieben ist. Die optische Faser 110 hat in dem dargestellten Ausführungsbeispiel eine Länge von mindestens 40 mm, insbesondere mindestens 90 mm, besonders bevorzugt mindestens 100 mm, wie beispielsweise 110 mm.

Die Faserhalterung 120 ist angeordnet und ausgebildet, die optische Faser 110 mit einer einstellbaren Haltespannung vorzuspannen. In dem dargestellten Ausführungsbeispiel erfolgt das Einstellen der Haltespannung durch ein Verschieben von einer Faserbefestigung 122, 122' innerhalb der Faserhalterung 120 entlang einer Spannleiste 124. Ein präzises Verschieben wird dabei durch einen nicht dargestellten Mechanismus, wie beispielsweise ein Schraubgewinde eine Anzahl von normierten Distanzierungselementen und/oder dergleichen erreicht. Zudem weist die Faserhalterung 120 mindestens ein Ausschnittfenster 125 auf, welches für einen Beschriftungsprozess zum Einschreiben des Faser-Bragg-Gitters 115 geöffnet und für die Wellenlängenfilterung durch eine Abdeckvorrichtung 127 der Faserhalterung 120 geschlossen werden kann. In dem dargestellten Zustand erfolgt zwar die Wellenlängenfilterung an der eingebrachten Lichtwelle 105, aber aus Gründen der Veranschaulichung der Abdeckvorrichtung 127 ist diese dennoch in einem geöffneten Zustand gezeigt. Bei der Abdeckvorrichtung 127 handelt es sich vorliegend um eine Abdeckklappe 128, die über ein Gewinde geöffnet und geschlossen werden kann. Zusätzlich kann eine Verriegelung der Abdeckklappe im geschlossenen Zustand möglich sein.

Zudem ist die optische Faser 110 derart in der Faserhalterung 120 befestigt, dass an beiden Enden 118, 118' der optischen Faser 110 ein jeweiliges freies Faserende 119, 119' außerhalb der Faserhalterung 120 derart bereitgestellt ist, dass das jeweilige freie Faserende 119, 119' mit einer jeweiligen anderen externen optischen Faser 130, 130' verbunden werden kann. Die mögliche Verbindung mit der externen optischen Faser 130, 130', beispielsweise über ein umhüllendes Verbindungselement und/oder über eine Verschmelzung mit Lichtbögen mittels eines Fusionsspleißers, ist in dem dargestellten Ausführungsbeispiel aus Gründen der Übersichtlichkeit nicht gezeigt.

Die Faserbefestigungen 122, 122' innerhalb der Faserhalterung, weisen beide eine V-förmige und/oder U-förmige Aufnahme auf, um die optische Faser 110 darin abzulegen und zu befestigen, insbesondere möglichst dauerhaft zu befestigen. Die Verbindung erfolgt vorzugsweise über nicht dargestellte Klebepunkte. Alternativ oder ergänzend kann die Befestigung der optischen Faser 110 innerhalb der Faserhalterung 120 über eine kraftschlüssige Verbindung, wie beispielsweise eine Pressung der optischen Faser 110 erfolgen. Das Vorsehen von genau zwei Faserbefestigungen 122, 122' ist besonders vorteilhaft, um durch ein Verschieben wenigstens einer der Faserbefestigungen 122, 122' die Haltespannung einzustellen. Diese Einstellung der Haltespannung erfolgt vorzugsweise vor einem Einschreiben des Faser-Bragg-Gitters 115.

Vorzugsweise ist die Faserhalterung 120 aus einem robusten Material, wie etwa einem Metall gebildet, um die Haltespannung für die optische Faser 110 zuverlässig bereitstellen zu können.

Das Faser-Bragg-Gitter 115 wurde in dem dargestellten Ausführungsbeispiel derart eingeschrieben, dass die sich wiederholenden Gitterschichten 117 des Faser-Bragg-Gitters 115 senkrecht zu der Erstreckungsrichtung 112 sind. Die Periodizität oder der Abstand zwischen den Gitterebenen kann gleichmäßig oder ungleichmäßig sein und/oder über die Länge der Faser allmählich zunehmen oder abnehmen. Die Gitterebenen können alternativ oder ergänzend spezielle Strukturen mit Phasenverschiebungen innerhalb der Schichten aufweisen. Alternativ können Gitterebenen des Faser-Bragg-Gitters auch gekippt gegen die Erstreckungsrichtung vorgesehen sein.

Vorzugsweise ist die Haltespannung für die optische Faser 110 derart eingestellt, dass für einen vorbestimmten Temperaturbereich und/oder eine vorbestimmte Temperatur temperaturbedingte Änderungen innerhalb des Faser-Bragg-Gitters 115 durch die Haltespannung im Wesentlichen kompensiert sind. Solch eine Temperatur-Kompensation führt im Idealfall dazu, dass in einem vorbestimmten Temperaturbereich und/oder bei einer vorbestimmten Temperatur, also insbesondere im Bereich um eine vorbestimmte Temperatur, das erfindungsgemäße optische Filtersystem zu einem athermischen Filtersystem wird. Die theoretischen Grundlagen für das mögliche athermische Verhalten sind oben erläutert und zudem beispielsweise in US 6,907,164 B2 detailliert beschrieben.

Grundlage hierfür ist unter anderem die Umrechnung zwischen Längenänderung $\Delta L$ der optischen Faser 110 und der Haltespannung E. Die Haltespannung wird dabei auch als Verformung bezeichnet und berechnet sich mit der gesamten Länge L der optischen Faser 110 zu $E=\Delta L/L$. Für eine Verformung von $200\mu E$ und einer Länge der optischen Faser 110 von 110 mm muss man daher eine Längenänderung von 0,022 mm erreichen. So kann man durch ein Verschieben mindestens einer Faserbefestigung 122 direkt die Längenänderung und dadurch die Verformung einstellen. Diese Haltespannung wird durch eine Temperaturveränderung beeinflusst. Ähnlich wird der Abstand zwischen den Gitterebenen 117 des Faser-Bragg-Gitters 115 durch eine Temperaturveränderung und ein dadurch verursachtes Ausdehnen oder Zusammenziehen der optischen Faser 110 beeinflusst. Diese Effekte lassen sich abhängig von dem verwendeten Temperaturbereich und/oder der aktuellen Temperatur und angesichts der Erläuterungen aus der Beschreibungseinleitung oben so ausgleichen, dass ein im Wesentlichen athermisches optisches Filtersystem vorliegt.

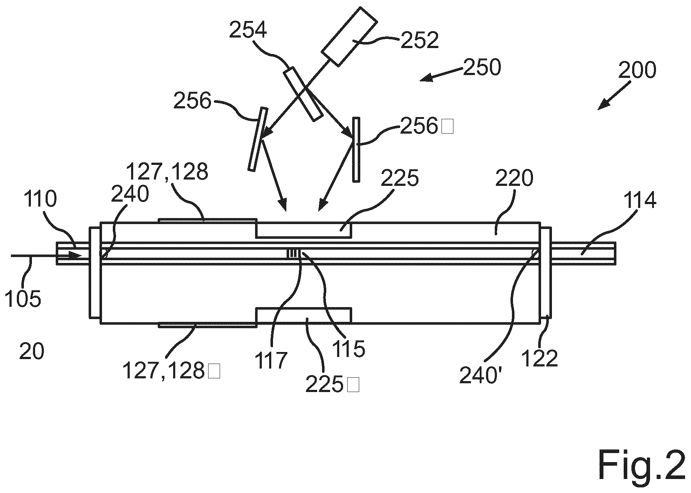

Fig. 2 zeigt eine schematische Darstellung eines zweiten Ausführungsbeispiels des optischen Filtersystems 200 gemäß dem ersten Aspekt der Erfindung.

Das optische Filtersystem 200 unterscheidet sich von dem in Fig. 1 dargestellten optischen Filtersystem 100 dadurch, dass die Faserhalterung 220 zwei Ausschnittfenster 225, 225' aufweist, die beide jeweils für einen Beschriftungsprozess zum Einschreiben des Faser-Bragg-Gitters 115 geöffnet und für die Wellenlängenfilterung geschlossen werden können. Die beiden Ausschnittfenster 225, 225' sind einander gegenüberliegend. Dabei wird als Abdeckvorrichtung 127 ein jeweiliger Abdeckeinschub 228, 228' an beiden Austrittfenstern 225, 225' verwendet. In einem nicht dargestellten alternativen oder ergänzenden Ausführungsbeispiel wird als Abdeckvorrichtung eine Abdeckauflage oder dergleichen verwendet.

Zudem ist in Fig. 2 die Anordnung der optischen Faser 110 über mindestens einen Klebepunkt 240, 240', vorliegend über genau zwei Klebepunkte 240, 240', in der Faserhalterung 220 dargestellt. Dabei sind die jeweiligen Klebepunkte 240, 240' an beiden Seiten relativ zum Faser-Bragg-Gitter 115 angeordnet. Hierdurch kann über das Einstellen der Haltespannung, also der zu bewirkenden Verformung, auch der Abstand zwischen den Gitterebenen 117 des Faser-Bragg-Gitters 115 beeinflusst werden.

Die Befestigung der optischen Faser 110 erfolgt dabei an einem nicht-ummantelten Teil der optischen Faser 110, was jedoch in Fig. 2 aus Gründen der Übersichtlichkeit nicht dargestellt ist. Der nicht-ummantelte Teil kann beispielsweise ein Teil der optischen Faser 110 ohne eine zusätzliche Umhüllung des Faserkerns 114 mit einem optischen Medium sein.

Schließlich zeigt Fig. 2 auch eine mögliche Ausgestaltung des Schreib-Verfahrens zum Einschreiben des Faser-Bragg-Gitters 115. Hierbei wird als Gitter-Schreibgerät 250 ein System zum Ausführen eines interferometrischen Verfahrens gezeigt. Dieses System umfasst einen Laser 252, insbesondere einen UV-Laser, der einen Strahlteiler 254 anstrahlt, wobei die beiden Teilstrahlen über einen jeweiligen Spiegel 256, 256' zu einem Zielort für das Faser-Bragg-Gitter 115 reflektiert werden. Durch einen Gangunterschied zwischen den beiden Teilstrahlen gibt es in der Intensität des Laserstrahls innerhalb der optischen Faser 110 stark verstärkte Bereiche, an denen dann das Faser-Bragg-Gitter entsteht, und Bereiche der destruktiven Interferenz, an denen das Gitter-Schreibgerät 250 gar keinen Einfluss auf die optische Faser 110 hat. Details dazu, wie über einen eingestellten Einstrahlwinkel, die gewählte Laserwellenlänge und die Brechzahl $n_K$ des Faserkerns 114 die unterdrückte Bragg-Wellenlänge des Faser-Bragg-Gitters 115 vorbestimmt wird, sind grundsätzlich bekannt und werden daher im Folgenden nicht weiter erläutert.

In einem nicht dargestellten Ausführungsbeispiel für das Gitter-Schreibgerät wird über ein Anwenden einer Fotomaske das Faser-Bragg-Gitter erzeugt. Das Anwenden der Fotomaske erlaubt ein besonders robustes Verfahren zum Erzeugen des Faser-Bragg-Gitters, da nur ein einziges optisches Element verwendet wird, um durch eine Bestrahlung dieses Elements, also der Fotomaske, mit einem Laser, insbesondere einem UV-Laser, ein vorbestimmtes Interferenzmuster zu erzeugen und dadurch das Faser-Bragg-Gitter in der optischen Faser bereitzustellen. Die Fotomaske umfasst dabei vorzugsweise eine äußere Maskenstruktur und ein optisches Medium zum Verändern der Phasen von an der äußeren Maskenstruktur gestreuten Laserstrahlen. Das Anwenden von Fotomasken zum Bereitstellen der Faser-Bragg-Gitter ist auf diesem Gebiet der Technik grundsätzlich bekannt, so dass Details im Folgenden nicht weiter erläutert werden.

Ein weiteres bekanntes Verfahren zum Umsetzen des Gitter-Schreibgerätes kann über eine direkte Bestrahlung mit einem Femtosekunden-Laser im infraroten oder sichtbaren Bereich erfolgen, mit dem ein Faser-Bragg-Gitter direkt in die optische Faser geschrieben werden kann, wobei eine Geschwindigkeit der optischen Faserbewegung und eine Wiederholrate der entsprechenden Laserpulse einen Abstand zwischen den Gitterebenen des Faser-Bragg-Gitters bestimmen.

Derartige Gitter-Schreibgeräte sind nicht dauerhaft mit der Faserhalterung verbunden und stellen ein externes Gerät dar, welches für die Bereitstellung des erfindungsgemäßen optischen Filtersystems benötigt wird, um das Faser-Bragg-Gitter in die optische Faser einzuschreiben.

In Fig. 2 sind einige Details der Faserhalterung 220, wie etwa die Spannleiste, aus Gründen der Übersichtlichkeit nicht dargestellt.

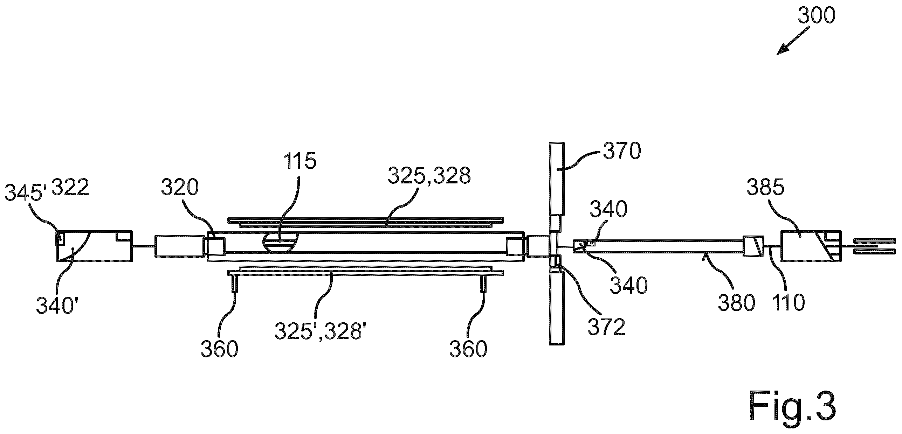

Fig. 3 zeigt eine schematische Darstellung eines dritten Ausführungsbeispiels des optischen Filtersystems 300 gemäß dem ersten Aspekt der Erfindung.

Das optische Filtersystem 300 ist ein besonders bevorzugtes Ausführungsbeispiel des erfindungsgemäßen optischen Filtersystems.

Das optische Filtersystem 300 verfügt verglichen mit den vorherigen optischen Filtersystemen zusätzlich über Montagebefestigungspunkte 360 an der Faserhalterung 320 für eine reproduzierbare Montage des optischen Filtersystems 300 in einem externes Gitter-Schreibgerät für das Einschreiben des Faser-Bragg-Gitters 115. Die Montagebefestigungspunkte 360 ermöglichen ein zuverlässiges Verbinden des optischen Filtersystems 300 mit einem vorbestimmten Punkt, beispielsweise durch ein Einrasten, Festschrauben, Einstecken der Faserhalterung 320 und/oder dergleichen.

Weiterhin zeigt Fig. 3 ein Distanzierungselement 372, über welches das Vorspannen der optischen Faser 110 innerhalb der Faserhalterung 320 erfolgt. Das Distanzierungselement 372 ist besonders präzise verschiebbar. **In** dem dargestellten Ausführungsbeispiel wird insbesondere ein vorgegebenes Distanzierungsgerüst 370 verwendet, um eine möglichst präzise Anordnung der Komponenten des optischen Systems der jeweiligen Faserbefestigung 322 und dadurch ein präzises Vorspannen der optischen Faser 110 zu ermöglichen. Das Distanzierungselement 372 kann beispielsweise Distanzierungsringe mit präzise vorbestimmter Dicke umfassen, die zu einer Mehrzahl von Distanzierungsringen kombiniert die auszuführende Verschiebung der Faserbefestigung 322 sicherstellen. Das Distanzierungselement wird in einem alternativen oder ergänzenden Ausführungsbeispiel nach einem Entfernen des Distanzierungsgerüsts an dem optischen System angeordnet.

In dem dargestellten Ausführungsbeispiel ist das Distanzierungsgerüst 370 eine Distanzierungsscheibe, die aus mindestens zwei Teilen besteht, welche voneinander zur weiteren Verwendung des optischen Systems 300 getrennt werden können, um ein vorzugsweise breiteres Distanzierungselement 372 einzubringen, welches die Vorspannung der optischen Faser definiert.

Das in Fig. 3 dargestellte optische Filtersystem umfasst einen Winkelversteller 380, der eine ungewollte Rotation der optischen Faser 110 korrigieren kann.

Einer der Klebepunkte 340 ist an dem Winkelversteller 380 vorgesehen, während der weitere Klebepunkt 340' an der Faserbefestigung 322 vorliegt.

Zudem weist das optische Filtersystem 300 für das Bereitstellen der Klebepunkte 340, 340' jeweils an dem Winkelversteller 380 und an der Faserbefestigung 322 eine Bohrung 345, 345', insbesondere eine Querbohrung auf. Über die Bohrungen 345, 345' kann besonders präzise der jeweilige Klebepunkt 340, 340' bereitgestellt werden. Hierdurch kann auch ein besonders präzises Einstellen der Haltespannung ermöglicht sein. Zudem kann über die Bohrungen 345, 345' ein Lösungsmitte, wie beispielsweise Acetone, an die Klebepunkte 340, 340' gebracht werden, um diese Klebepunkte 340, 340' besonders zuverlässig zu lösen, ohne dabei die optische Faser 110 zu beschädigen. Dadurch kann die optische Faser 110 vorteilhaft demontiert und erneut verwendet werden. **In** einem nicht dargestellten Ausführungsbeispiel ist nur eine Bohrung zum Bereitstellen eines Klebepunktes an dem erfindungsgemäßen optischen Filtersystem vorgesehen.

Die Faserhalterung 320 weist vier ebene Flächen auf, die es vorzugsweise ermöglichen, mit einem genormten Schlüssel, insbesondere einem genormten Schlüssel der Breite SW13, ein definiertes Drehmoment bereitzustellen. Die Faserhalterung 320 ist vorzugsweise zumindest teilweise röhrenförmig ausgebildet, wobei eine jeweilige Abdeckklappe 328, 328' an den zwei Ausschnittfenstern 325, 325' vorgesehen ist. Die Abdeckklappe ist über eine Schraube an der Faserhalterung 320 angeordnet und kann daher in eine offene oder geschlossene Stellung gedreht werden. Schließlich weist das optische Filtersystem 300 auch eine Sicherungskappe 385 an einem Ende der optischen Faser 110 auf. Die Sicherungskappe 385 kann beispielsweise zum Fixieren des Distanzierungselements 372 verwendet werden. Vorzugsweise macht die Sicherungskappe 385 die Faserhalterung 320 orientierungsinvariant, denn sie verhindert, dass die Gewichtskraft der Faserhalterung 320 eine zusätzliche Kraft auf die optische Faser 110 ausübt, die bei nicht horizontaler Ausrichtung wegen der Gewichtskraft auftreten würde.

Grundsätzlich kann die erfindungsgemäße Faserhalterung je nach Materialauswahl vorteilhaft über ein 3D-Druck-Verfahren hergestellt werden.

Grundsätzlich kann die eingestellte Haltespannung in erfindungsgemäßen Umsetzungen des optischen Filtersystems über einen externen und/oder über einen in das Filtersystem integrierten Dehnungssensor überprüft werden. Alternativ oder ergänzend kann eine Position des Distanzierungselements über den Dehnungssensor geregelt und/oder gesteuert werden.

Aus den beschriebenen Eigenschaften des erfindungsgemäßen optischen Filtersystems ergibt sich direkt, dass alle Ausführungsbeispiele dieses Systems vorteilhaft für eine Temperaturkompensation bei einer Nahinfrarotspektroskopie verwendet werden können. Insbesondere ermöglicht das erfindungsgemäße optische Filtersystem eine zuverlässige Unterdrückung der OH-Linie bei der Nahinfrarotspektroskopie in astronomischen Zusammenhang, bei dem die OH-Linie der Erdatmosphäre Messungen erheblich stören kann.

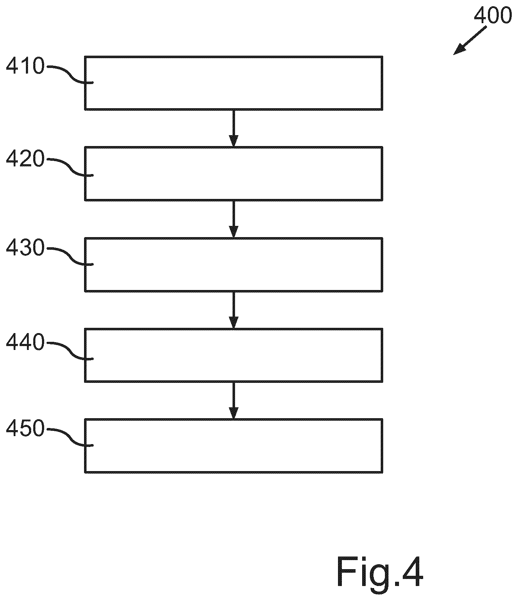

Fig. 4 zeigt ein Flussdiagramm eines Ausführungsbeispiels eines Verfahrens 400 gemäß einem dritten Aspekt der Erfindung.

Das erfindungsgemäße Verfahren 400 ist zur Wellenlängenfilterung, insbesondere zur Unterdrückung der Hydroxyl-(OH)-Linie in empfangenen Lichtwellen, ausgebildet. Hierfür weist es die im Folgenden beschriebenen Schritte auf.

Ein erster Schritt 410 umfasst ein Vorspannen einer optischen Faser, welche einen sich in Erstreckungsrichtung der optischen Faser erstreckenden Faserkern mit einem Brechungsindex $n_K$ aufweist, in einer Faserhalterung mit einer Haltespannung, insbesondere mit einer vorbestimmten Haltespannung.

Ein nächster Schritt 420 umfasst ein Einschreiben eines Faser-Bragg-Gitter aus sich in Erstreckungsrichtung wiederholenden Gitterschichten mit einem Brechungsindex $n_G$ in den Faserkern der optischen Faser über ein Laser-Verfahren, wobei entsprechende Laserstrahlen für das Einschreiben die Faserhalterung über mindestens ein Ausschnittfenster der Faserhalterung passieren.

Ein darauffolgender Schritt 430 umfasst ein Schließen des mindestens einen Ausschnittfensters durch eine Abdeckvorrichtung der Faserhalterung.

Ein weiterer Schritt 440 umfasst ein Verbinden eines jeweiligen freien Faserendes der optischen Faser, welches aus der Faserhalterung herausragt, mit einer jeweiligen anderen optischen Faser, während die optische Faser vorgespannt in der Faserhalterung bleibt.

Ein abschließender Schritt 450 umfasst ein Ausführen der Wellenlängenfilterung mit der durch die Faserhalterung vorgespannten optischen Faser.

Vorzugsweise werden die Schritte 410, 420, 430, 440, 450 in der angegebenen Reihenfolge ausgeführt. Zwischen den ersten drei Schritten und den abschließenden Schritten 440 und 450 kann ein großer Zeitversatz möglich sein, da vielleicht erst langer nach dem Vorbereiten der optischen Faser in der Faserhalterung mit der Haltespannung auch tatsächlich die Wellenlängenfilterung erfolgt. Der Schritt 440 ist dabei ein vorbereitender Schritt für die Wellenlängenfilterung.

Die beschriebenen Schritte können dabei zumindest teilweise automatisiert ausgeführt werden.

In einem Ausführungsbeispiel des erfindungsgemäßen Verfahrens 400 erfolgt das Vorspannen der optischen Faser über ein Ankleben eines entsprechenden Abschnitts der optischen Faser an einer Faserbefestigung der Faserhalterung und einen darauffolgenden Vorspannprozess. Alternativ oder ergänzend zum Ankleben kann ein kraftschlüssiges Verbinden der optischen Faser, beispielsweise unter Verwendung einer Pressung an einer Ummantelung, vorgesehen sein.

In einer besonders bevorzugten Variante des vorhergehenden Ausführungsbeispiels wird im Rahmen des Vorspannprozesses die Haltespannung für die optische Faser derart eingestellt, dass für einen vorbestimmten Temperaturbereich und/oder eine vorbestimmte Temperatur temperaturbedingte Änderungen innerhalb des Faser-Bragg-Gitters durch die Haltespannung im Wesentlichen kompensiert werden. In dieser Variante wird vorteilhaft ausgenutzt, dass die Haltespannung nach einmaliger Einstellung nicht mehr eingestellt werden muss, da die optische Faser dauerhaft in der gleichen Faserhalterung verbleiben kann.

In einem vorteilhaften Ausführungsbeispiel des erfindungsgemäßen Verfahrens erfolgt das Einschreiben des Faser-Bragg-Gitters über ein interferometrisches Verfahren, über ein Anwenden einer Fotomaske und/oder über eine direkte Laserbeschriftung mittels Femtosekunden-Laser. Im Rahmen derartiger Schreibverfahren können weitere Verfahrensschritte vorgesehen sein, die das erfindungsgemäße Verfahren ergänzen können. Vorteilhaft können derartige Schreibverfahren teilweise oder komplett automatisiert ausgeführt werden.

**Bezugszeichenliste**

| | |
|---|---|
| 100, 200, 300 | optisches Filtersystem |
| 105 | Lichtwelle |
| 110 | optische Faser |
| 112 | Erstreckungsrichtung |
| 114 | Faserkern |
| 115 | Faser-Bragg-Gitter |
| 117 | Gitterschicht |
| 118, 118' | Enden der optischen Faser |
| 119, 119' | freies Faserende außerhalb der Faserhalterung |
| 120, 220, 320 | Faserhalterung |
| 122, 122', 322 | Faserbefestigung |
| 124 | Spannleiste |
| 125, 225, 225', 325, 325' | Austrittfenster |
| 127 | Abdeckvorrichtung |
| 128, 328, 328' | Abdeckklappe |
| 130, 130' | externe optische Faser |
| 228, 228' | Abdeckeinschub |
| 240, 240', 340, 340' | Klebestelle |
| 250 | Gitter-Schreibgerät |
| 252 | Laser |
| 254 | Strahlteiler |
| 256, 256' | Spiegel |
| 345, 345' | Bohrung |
| 360 | Montagebefestigungspunkte |
| 370 | Distanzierungsgerüst |
| 372 | Distanzierungselement |
| 380 | Winkelversteller |
| 385 | Sicherungskappe |
| 400 | Verfahren |
| 410, 420, 430, 440, 450 | Verfahrensschritte |

**Patentansprüche**

**1.** Optisches Filtersystem (100) zur Wellenlängenfilterung, insbesondere zur Unterdrückung einer vorbestimmten Wellenlänge, beispielsweise der Hydroxyl-(OH)-Linie, in empfangenen Lichtwellen (105), mit

- einer optischen Faser (110), welche einen sich in Erstreckungsrichtung (112) der optischen Faser (110) erstreckenden Faserkern (114) mit einem Brechungsindex $n_K$ aufweist, in den ein Faser-Bragg-Gitter (115) aus sich in Erstreckungsrichtung (112) wiederholenden Gitterschichten (117) mit einem Brechungsindex $n_G$ eingeschrieben ist,
- einer Faserhalterung (120), welche angeordnet und ausgebildet ist, die optische Faser (110) mit einer einstellbaren Haltespannung vorzuspannen, wobei die Faserhalterung (120) mindestens ein Ausschnittfenster (125) aufweist, welches für einen Beschriftungsprozess zum Einschreiben des Faser-Bragg-Gitters (115) geöffnet und für die Wellenlängenfilterung durch eine Abdeckvorrichtung (127) der Faserhalterung (120) geschlossen werden kann, und wobei die optische Faser (110) derart in der Faserhalterung (120) befestigt ist, dass an beiden Enden (118, 118') der optischen Faser ein jeweiliges freies Faserende (119, 119') außerhalb der Faserhalterung (120) derart bereitgestellt ist, dass das jeweilige freie Faserende (119, 119') mit einer jeweiligen anderen externen optischen Faser (130, 130') verbunden werden kann.

2.  Optisches Filtersystem (100) gemäß Anspruch 1, wobei die Haltespannung für die optische Faser (110) derart eingestellt ist, dass für einen vorbestimmten Temperaturbereich und/oder eine vorbestimmte Temperatur temperaturbedingte Änderungen innerhalb des Faser-Bragg-Gitters (115) durch die Haltespannung im Wesentlichen kompensiert sind.

3.  Optisches Filtersystem (100) gemäß Anspruch 1 oder 2, wobei die Faserhalterung (120) zwei Ausschnittfenster (225, 225'), aufweist, die beide jeweils für einen Beschriftungsprozess zum Einschreiben des Faser-Bragg-Gitters (115) geöffnet und für die Wellenlängenfilterung geschlossen werden können.

4.  Optisches Filtersystem (100) gemäß mindestens einem der vorhergehenden Ansprüche, wobei die Abdeckvorrichtung (127) eine Abdeckklappe (128), ein Abdeckeinschub (228), eine Abdeckauflage oder dergleichen ist.

5.  Optisches Filtersystem (100) gemäß mindestens einem der vorhergehenden Ansprüche, wobei die sich wiederholenden Gitterschichten (117) des Faser-Bragg-Gitters (115) senkrecht zu der Erstreckungsrichtung (112) sind.

6.  Optisches Filtersystem (100) gemäß mindestens einem der vorhergehenden Ansprüche, wobei die Befestigung der optischen Faser (110) an einem nicht-ummantelten Teil der optischen Faser (110) erfolgt.

7.  Optisches Filtersystem (100) gemäß mindestens einem der vorhergehenden Ansprüche, wobei die Faserhalterung (120) ausgebildet ist, die optische Faser (110) zum Vorspannen über mindestens einen Klebepunkt (240, 240'), insbesondere über einen jeweiligen Klebepunkt (240, 240') an beiden Seiten relativ zum Faser-Bragg-Gitter (115), zu halten.

8.  Optisches Filtersystem (100) gemäß mindestens einem der vorhergehenden Ansprüche, wobei die Faserhalterung (120) Montagebefestigungspunkte (360) für eine reproduzierbare Montage des optischen Filtersystems (100) in einem externes Gitter-Schreibgerät (250) für das Einschreiben des Faser-Bragg-Gitters (115) aufweist.

9.  Optisches Filtersystem (100) gemäß mindestens einem der vorhergehenden Ansprüche, wobei das Vorspannen der optischen Faser (110) innerhalb der Faserhalterung (120) über ein präzise verschiebbares Distanzierungselement (372) erfolgt.

10. Verwendung des optischen Filtersystems (100) gemäß mindestens einem der vorhergehenden Ansprüche für eine Temperaturkompensation, insbesondere für eine Temperaturkompensation bei einer Infrarotspektroskopie, bevorzugt bei einer Nahinfrarotspektroskopie.

11. Verfahren (400) zur Wellenlängenfilterung, insbesondere zur Unterdrückung einer vorbestimmten Wellenlänge, beispielsweise der Hydroxyl-(OH)-Linie, in empfangenen Lichtwellen (105), aufweisend die Schritte

- Vorspannen einer optischen Faser (110), welche einen sich in Erstreckungsrichtung (112) der optischen Faser (110) erstreckenden Faserkern (114) mit einem Brechungsindex $n_K$ aufweist, in einer Faserhalterung (120) mit einer Haltespannung, insbesondere mit einer vorbestimmten Haltespannung;
- Einschreiben eines Faser-Bragg-Gitter (115) aus sich in Erstreckungsrichtung (112) wiederholenden Gitterschichten (117) mit einem Brechungsindex $n_G$ in den Faserkern (114) der optischen Faser (110) über ein Laser-Verfahren, wobei entsprechende Laserstrahlen für das Einschreiben die Faserhalterung (120) über mindestens ein Ausschnittfenster (125) der Faserhalterung (120) passieren;
- Schließen des mindestens einen Ausschnittfensters (125) durch eine Abdeckvorrichtung (127) der Faserhalterung (120);
- Verbinden eines jeweiligen freien Faserendes (119, 119') der optischen Faser (110), welches aus der Faserhalterung (120) herausragt, mit einer jeweiligen anderen optischen Faser (130, 130'), während die optische Faser (110) vorgespannt in der Faserhalterung (120) bleibt; und
- Ausführen der Wellenlängenfilterung mit der durch die Faserhalterung (120) vorgespannten optischen Faser (110).

12. Verfahren (400) gemäß Anspruch 11, wobei das Vorspannen der optischen Faser (110) über ein Ankleben eines entsprechenden Abschnitts der optischen Faser (110) an einer Faserbefestigung (122) der Faserhalterung (120) und einen darauffolgenden Vorspannprozess erfolgt.

13. Verfahren (400) gemäß Anspruch 12, wobei im Rahmen des Vorspannprozesses die Haltespannung für die optische Faser (110) derart eingestellt wird, dass für einen vorbestimmten Temperaturbereich und/oder eine vorbestimmte Temperatur temperaturbedingte Änderungen innerhalb des Faser-Bragg-Gitters (115) durch die Haltespannung im Wesentlichen kompensiert werden.

14. Verfahren (400) gemäß mindestens einem der Ansprüche 11 bis 13, wobei das Einschreiben des Faser-Bragg-Gitters (115) über ein interferometrisches Verfahren, über ein Anwenden einer Fotomaske und/oder über eine direkte Laserbeschriftung mittels Femtosekunden-Laser erfolgt.

Fig.1

Fig.2

EP 4 667 987 A1

Fig.3

400

410

420

430

440

450

Fig.4

Europäisches
Patentamt

European
Patent Office

Office européen
des brevets

# EUROPÄISCHER RECHERCHENBERICHT

Nummer der Anmeldung

EP 25 18 3610

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 10 454 247 B1 (ZAYER NADHUM K [GB]) 22. Oktober 2019 (2019-10-22) <br> * Abbildung 2 * <br> * Abbildung 6 * <br> * Abbildung 3 * <br> ----- | 1-14 | INV. <br> G02B6/02 |
| Y | US 6 498 891 B1 (MONTESANTO STEVE [US] ET AL) 24. Dezember 2002 (2002-12-24) <br> * Abbildung 2 * <br> * Abbildung 6 * <br> * Spalte 5, Zeilen 23-35 * <br> ----- | 1-14 | |
| A | US 2003/021306 A1 (FERNALD MARK R [US] ET AL) 30. Januar 2003 (2003-01-30) <br> ----- | 1-14 | |
| A | US 5 787 213 A (BROWNLOW DARRYL LENEIR [US]) 28. Juli 1998 (1998-07-28) <br> ----- | 1-14 | |
| A | KASHYAP R ET AL: "SIMPLE TECHNIQUE FOR APODISING CHIRPED AND UNCHIRPED FIBRE BRAGG GRATINGS", <br> ELECTRONICS LETTERS, THE INSTITUTION OF ENGINEERING AND TECHNOLOGY, GB, <br> Bd. 32, Nr. 13, 20. Juni 1996 (1996-06-20) , Seiten 1226-1228, XP000599206, <br> ISSN: 0013-5194, DOI: 10.1049/EL:19960837 <br> ----- | 1-14 | RECHERCHIERTE SACHGEBIETE (IPC) <br><br> G02B |
| A | US 2004/099801 A1 (SCHULZ WHITTEN LEE [US] ET AL) 27. Mai 2004 (2004-05-27) <br> ----- | 1-14 | |
| A | US 6 621 960 B2 (OPLINK COMMUNICATIONS INC [US]) 16. September 2003 (2003-09-16) <br> ----- | 1-14 | |
| A | US 6 636 667 B2 (OPLINK COMM INC [US]) 21. Oktober 2003 (2003-10-21) <br> ----- | 1-14 | |

Der vorliegende Recherchenbericht wurde für alle Patentansprüche erstellt

| Recherchenort | Abschlußdatum der Recherche | Prüfer |
|---|---|---|
| Den Haag | 13. Oktober 2025 | Verbandt, Yves |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**   EP 25 18 3610

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-10-2025

| Im Recherchenbericht angeführtes Patentdokument | Datum der Veröffentlichung | Mitglied(er) der Patentfamilie | Datum der Veröffentlichung |
|---|---|---|---|
| US 10454247 B1 | 22-10-2019 | CN 111025462 A<br>JP 7113799 B2<br>JP 2020061548 A<br>KR 20200040664 A<br>US 10454247 B1 | 17-04-2020<br>05-08-2022<br>16-04-2020<br>20-04-2020<br>22-10-2019 |
| US 6498891 B1 | 24-12-2002 | KEINE | |
| US 2003021306 A1 | 30-01-2003 | KEINE | |
| US 5787213 A | 28-07-1998 | KEINE | |
| US 2004099801 A1 | 27-05-2004 | US 2001030281 A1<br>US 2003201385 A1<br>US 2004099801 A1 | 18-10-2001<br>30-10-2003<br>27-05-2004 |
| US 6621960 B2 | 16-09-2003 | KEINE | |
| US 6636667 B2 | 21-10-2003 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20150144773 A1

- US 6907164 B2